# EUROPÄISCHE PATENTSCHRIFT

(11) **EP 2 758 252 B1**
(45) Veröffentlichungstag und Bekanntmachung des Hinweises auf die Patenterteilung: **24.02.2016**
(21) Anmeldenummer: 12766384.7
(22) Anmeldetag: 18.09.2012
(51) Int. Cl.: B42D 25/355, B42D 25/346, B42D 25/351, B42D 25/455, B42D 25/46, B42D 25/47, B32B 7/12, B32B 29/00, D21H 21/42

(54) **WERTDOKUMENTSUBSTRAT, FOLIENVERBUND, VERFAHREN ZUM HERSTELLEN DERSELBEN UND WERTDOKUMENT**
SUBSTRATE OF A VALUABLE DOCUMENT, COMPOSITE FILM, METHOD FOR PRODUCING SAME, AND VALUABLE DOCUMENT
SUBSTRAT DE DOCUMENT DE VALEUR, FILM COMPOSITE, PROCÉDÉ DE FABRICATION DE CEUX-CI ET DOCUMENT DE VALEUR

(30) Priorität: 23.09.2011 DE 102011114211
(43) Veröffentlichungstag der Anmeldung: 30.07.2014
(73) Patentinhaber: Giesecke & Devrient GmbH, 81677 München (DE)
(72) Erfinder: RENNER, Patrick, 83677 Reichersbeuern (DE)
(86) Internationale Anmeldenummer: PCT/EP2012/003891
(87) Internationale Veröffentlichungsnummer: WO 2013/041208

(56) Entgegenhaltungen:
- DE-A1-102004 008 840
- GB-A- 1 446 339
- GB-A- 2 204 532

## Beschreibung

Die Erfindung betrifft ein mehrlagiges Wertdokumentsubstrat und ein Verfahren zum Herstellen desselben, einen zur Herstellung von Wertdokumenten geeigneten Folienverbund und ein Verfahren zum Herstellen desselben, und ein aus dem erfindungsgemäßen Wertdokumentsubstrat oder dem erfindungsgemäßen Folienverbund erhältliches Wertdokument.

Wertdokumente im Sinne der Erfindung sind unter Anderem Banknoten, Aktien, Anleihen, Urkunden, Gutscheine, Schecks, Flugscheine, hochwertige Eintrittskarten, Etiketten zur Produktsicherung, Kredit- oder Geldkarten, aber auch andere fälschungsgefährdete Dokumente, wie Pässe, Ausweiskarten oder sonstige Ausweisdokumente.

Wertdokumente, insbesondere Banknoten, werden üblicherweise aus Papiersubstraten gefertigt, die besondere Sicherheitsmerkmale, wie z.B. einen zumindest teilweise in das Papier eingearbeiteten Sicherheitsfaden und ein Wasserzeichen, aufweisen und die in der Regel aus Baumwollfasern hergestellt sind. Es existieren zahlreiche Ansätze, die Haltbarkeit solcher Wertdokumente zu verbessern, z.B. durch Lackierung der bedruckten Banknoten, durch Zusatz von Verstärkungsfasern oder durch Einsatz von Plastiksubstraten. Lackierungen haben den Nachteil, dass zwar die Verschmutzung reduziert wird, die mechanischen Eigenschaften aber kaum verbessert werden. Verstärkungsfasern wirken sich zwar vorteilhaft auf die mechanische Beständigkeit aus, der Grad der Verschmutzung wird durch die höhere Porosität des Papiers aber eher größer, so dass zusätzliche Beschichtungen aufgebracht werden müssen.

Haltbare und gegen Verschmutzung beständige Banknoten mit Papiereigenschaften lassen sich durch Verwendung von Folienverbunden oder Verbunden aus Papier mit außen aufgebrachten Folienlagen erzielen. Eine Folienverbundbanknote mit einem Papierkern gewährleistet zudem eine gute Weiterreißfestigkeit und den banknotentypischen Klang und Griff. Die Bedruckbarkeit kann durch das Aufbringen von Farbannahmeschichten auf die Folienoberflächen sichergestellt werden. Entsprechende Folienverbundbanknoten und Folienverbunde zur Herstellung derselben sind z.B. in der WO 2004/028825 A2 (ohne Öffnung) beschrieben.

DE102004008840 A1 offenbart ein Verfahren gemäß Anspruch 1, wobei die Schichten und das längliche Sicherheitselement nicht in Form einer Endlosbahn vorliegen, und wobei das Auftragen von Kaschierklebstoff auf eine Oberfläche von zumindest der ersten Schicht nicht mittels Kiss-Print erfolgt.

Der vorliegenden Erfindung liegt die Aufgabe zugrunde, die Fälschungssicherheit der im Stand der Technik bekannten Folienverbundbanknoten weiter zu erhöhen.

Diese Aufgabe wird durch das Verfahren zum Herstellen eines mehrlagigen Wertdokumentsubstrats, das daraus erhältliche mehrlagige Wertdokumentsubstrat, das Verfahren zum Herstellen eines Folienverbundes und den daraus erhältlichen, für die Herstellung von Wertdokumenten geeigneten Folienverbund gemäß den unabhängigen Ansprüchen gelöst. Die abhängigen Ansprüche geben vorteilhafte Ausgestaltungen der Erfindung an.

### Zusammenfassung der Erfindung

Ein erster Aspekt der Erfindung betrifft ein Verfahren zum Herstellen eines mehrlagigen Wertdokumentsubstrats, umfassend
A) das Bereitstellen einer ersten Schicht, einer zweiten Schicht und eines länglichen Sicherheitselements, wobei die erste Schicht zumindest eine durchgehende Öffnung aufweist und die erste Schicht und die zweite Schicht jeweils von einer polymeren Schicht oder einer Papierschicht gewählt sind,
B) das Auftragen von Kaschierklebstoff auf eine Oberfläche von zumindest der ersten Schicht mittels Kiss-Print, optional Auftragen von Kaschierklebstoff auf eine Oberfläche der zweiten Schicht,
C) das Zusammenkaschieren der ersten Schicht, der zweiten Schicht und des länglichen Sicherheitselements mittels Kaschierwalzen, so dass das längliche Sicherheitselement zwischen der ersten Schicht und der zweiten Schicht eingebettet wird und die Öffnung der ersten Schicht einseitig mit dem länglichen Sicherheitselement verschlossen wird.

Das durch das erfindungsgemäße Verfahren erhältliche mehrlagige Wertdokumentsubstrat zeichnet sich dadurch aus, dass ein längliches Sicherheitselement, wie etwa ein Sicherheitsstreifen oder Sicherheitsfaden, oberhalb einer durchgehenden Öffnung einer Substratschicht (die sogenannte "erste Schicht") angeordnet ist und sich in Abhängigkeit von der Betrachtungsrichtung, nämlich vorderseitige Draufsicht, rückseitige Draufsicht oder Betrachtung im Durchlicht, unterschiedliche optische Eindrücke ergeben. Im Gegensatz zu den bislang üblichen Herstellungsverfahren ist das Sicherheitselement bevorzugt ohne Heißsiegelkleber ausgestattet.

Anstelle des hierin verwendeten Begriffes "Substratschicht" kann gleichermaßen der Begriff Substratbahn oder Substratlage verstanden werden. Die Substratschichten und das längliche Sicherheitselement (z.B. Sicherheitsfaden oder Sicherheitsstreifen) liegen erfindungsgemäß anfangs jeweils in Form einer Endlosbahn vor.

Gemäß dem erfindungsgemäßen Herstellungsverfahren erfolgt das Einbetten des länglichen Sicherheitselements zwischen zwei Substratschichten, von denen eine erste Schicht zumindest eine durchgehende Öffnung aufweist, in einem Kaschierspalt zwischen zwei Kaschierwalzen. Kaschieranlagen für das Zusammenkaschieren von bis zu drei Substratbahnen sind im Stand der Technik bekannt, siehe z.B. die Druckschriften EP 2 085 218 A2 und EP 2 085 219 A2.

Es wurde gefunden, dass ein vorteilhaftes Zusammenkaschieren mittels Kaschierklebstoff ohne Verunreinigung der Kaschieranlage erfolgt, wenn der Kaschierklebstoff zumindest auf die mit zumindest einer durchgehenden Öffnung versehene Substratschicht durch das Kiss-Print-Verfahren aufgebracht wird. Unter dem Begriff "Kiss-Print" ist hierbei die geringstmögliche Berührung von Kaschierklebstoffauftragsform (z.B. Kaschierklebstoffauftragswalze) und der mit dem Kaschierklebstoff zu versehenen Substratschicht zu verstehen. Das Kiss-Print-Verfahren ist mit Bezug auf das Lackieren bzw. Einfärben von Bedruckstoffen im Stand der Technik bekannt (siehe z.B. "Handbuch der Printmedien" von H. Kipphan, Springer-Verlag, 2000, Seite 409; das Kapitel "Lackübertragung und -auftrag" der Broschüre "Process 4" der Firma KBA, Ausgabe 1, 2007, Seite 46; ein Verfahren und eine Vorrichtung zum Optimieren der Relativposition zweier Druckwerkszylinder zum Auffinden des Kiss-Print-Punktes ist z.B. in der Druckschrift DE 10 2010 000 907 A1 beschrieben). Erfolgt das Aufbringen des Kaschierklebstoffes auf die mit zumindest einer durchgehenden Öffnung versehene Substratschicht im Kiss-Print, d.h. mit niedrigem Presseurdruck, wird der Klebstoff trotz des perforierten Materials nicht auf die Gegendruckwalze des Kaschierwerks übertragen und kann somit die Anlage nicht verunreinigen. Anders gesagt, das erfindungsgemäße Verfahren gewährleistet, dass im Kaschierschritt kein Kaschierklebstoff durch die durchgehende Öffnung der Substratschicht gelangt. Da der Kaschierklebstoff auf die mit zumindest einer durchgehenden Öffnung versehene Substratschicht durch das Kiss-Print-Verfahren aufgebracht wird, erfolgt keine Einbringung von Klebstoff innerhalb der durchgehenden Öffnung. Mittels des erfindungsgemäßen Verfahrens ist es daher möglich, in einem einstufigen Kaschierschritt Kaschierverbunde zu erzeugen, die eine perforierte Außenlage oder sogar zwei perforierte Außenlagen aufweisen.

Es wird bevorzugt, bei der Herstellung eines mehrlagigen Wertdokumentsubstrats eine Papierschicht als eine erste Schicht, die mit Vorteil eine Dicke von mindestens 20µm hat und zumindest eine durchgehende Öffnung aufweist, und eine polymere Schicht, z.B. eine Folie, als eine zweite Schicht bereitzustellen. In diesem Fall wäre das durch das Verfahren erhaltene Wertdokumentsubstrat ein Papier-mit-Loch/Sicherheitselement/Folie-Verbund. Es können aber auch sowohl die erste Schicht, als auch die zweite Schicht jeweils in Form einer polymeren Schicht, z.B. eine Folie, vorliegen. In diesem Fall wäre das durch das Verfahren erhaltene Wertdokumentsubstrat ein Folie-mit-Loch/Sicherheitselement/Folie-Verbund. In diesem Fall hat die eine durchgehende Öffnung aufweisende Folie mit Vorteil eine Dicke von mindestens 6 µm.

Im Falle, dass die erste Schicht mehrere durchgehende Öffnungen aufweist und das längliche Sicherheitselement in Form eines Sicherheitsfadens bereitgestellt wird, lässt sich durch das erfindungsgemäße Verfahren ein Wertdokumentsubstrat mit einem darin eingebetteten Fensterfaden realisieren, wobei der Faden auf der Rückseite des Wertdokumentsubstrats vollständig eingebettet ist und auf der Vorderseite des Wertdokumentsubstrats teilweise eingebettet ist. Dabei tritt der Faden in Fensterbereichen an der Oberfläche des Wertdokuments hervor, während er in den dazwischen liegenden Stegbereichen im Inneren des Wertdokumentsubstrats eingebettet ist.

Gemäß einer ersten Variante des ersten Aspekts der Erfindung umfasst das Verfahren zum Herstellen eines mehrlagigen Wertdokuments den Schritt A) des Bereitstellens einer ersten Schicht, einer zweiten Schicht, einer dritten Schicht und eines länglichen Sicherheitselements, wobei die erste Schicht zumindest eine durchgehende Öffnung aufweist, die erste Schicht und die zweite Schicht jeweils von einer polymeren Schicht oder einer Papierschicht gewählt sind und die dritte Schicht eine polymere Schicht ist, den Schritt B) des Auftragens von Kaschierklebstoff auf eine Oberfläche der ersten Schicht und auf eine Oberfläche der dritten Schicht, optional auf eine Oberfläche der zweiten Schicht, wobei der Kaschierklebstoff auf die Oberfläche der ersten Schicht mittels Kiss-Print aufgetragen wird, und den Schritt C) des Zusammenkaschierens der ersten Schicht, der zweiten Schicht, der dritten Schicht und des länglichen Sicherheitselements mittels Kaschierwalzen, so dass die zweite Schicht und die dritte Schicht jeweils eine Deckschicht bilden, die erste Schicht eine Zwischenschicht bildet, das längliche Sicherheitselement zwischen der ersten Schicht und der zweiten Schicht eingebettet wird und die Öffnung der ersten Schicht einseitig mit dem länglichen Sicherheitselement verschlossen wird.

In der ersten Variante des ersten Aspekts der Erfindung werden vier Materialien, nämlich drei Substratbahnen und ein längliches Sicherheitselement (z.B. Sicherheitsfaden oder Sicherheitsstreifen) in einem Kaschierspalt eines Kaschierwerks zusammenkaschiert. Triplex-Kaschieranlagen sind im Stand der Technik bekannt (siehe z.B. EP 2 085 218 A2 oder EP 2 085 219 A2). Die Durchführung des Verfahrens gelingt beispielsweise, indem drei Abwickelwalzen für die drei Substratbahnen bereitgestellt werden, wobei für die Substratbahnen zusätzlich jeweils ein Klebstoffauftragswerk (z.B. eine Klebstoffauftragswalze) vorgesehen wird. Für das längliche Sicherheitselement wird eine Abwickelwalze vorgesehen.

Es wird bevorzugt, die erste Schicht, die zumindest eine durchgehende Öffnung aufweist, als eine Papierschicht bereitzustellen und die zweite Schicht und die dritte Schicht jeweils als eine polymere Schicht, z.B. eine Folie, bereitzustellen. Die Papierschicht weist mit Vorteil eine Dicke von mindestens 20µm auf. In diesem Fall wäre das durch das Verfahren erhaltene Wertdokumentsubstrat ein Folie/Sicherheitselement/Papier-mit-Loch/Folie-Verbund. Es ist aber ebenso möglich, die erste bis dritte Schicht jeweils als eine polymere Schicht, z.B. eine Folie, bereitzustellen. In diesem Fall wäre das durch das Verfahren erhaltene Wertdokumentsubstrat ein Folie/Sicherheitselement/Folie-mit-Loch/Folie-Verbund, d.h. ein reiner Folienverbund. In diesem Fall weist die eine durchgehende Öffnung aufweisende Folie mit Vorteil eine Dicke von mindestens 6 µm auf.

Gemäß einer zweiten Variante des ersten Aspekts der Erfindung umfasst das Verfahren zum Herstellen eines mehrlagigen Wertdokuments den Schritt A) des Bereitstellens einer ersten Schicht, einer zweiten Schicht und eines länglichen Sicherheitselements, wobei jede der ersten Schicht und der zweiten Schicht zumindest eine durchgehende Öffnung aufweisen und von einer polymeren Schicht oder einer Papierschicht gewählt sein können, den Schritt B) des Auftragens von Kaschierklebstoff sowohl auf eine Oberfläche der ersten Schicht, als auch auf eine Oberfläche der zweiten Schicht, wobei der Kaschierklebstoff jeweils mittels Kiss-Print aufgetragen wird, und den Schritt C) des Zusammenkaschierens der ersten Schicht, der zweiten Schicht und des länglichen Sicherheitselements mittels Kaschierwalzen, so dass das längliche Sicherheitselement zwischen der ersten Schicht und der zweiten Schicht eingebettet wird und sowohl die Öffnung der ersten Schicht, als auch die Öffnung der zweiten Schicht jeweils einseitig mit dem länglichen Sicherheitselement verschlossen werden.

Im erhaltenen Wertdokumentsubstrat können die durchgehende Öffnung der ersten Schicht und die durchgehende Öffnung der zweiten Schicht registergenau oder versetzt angeordnet sein.

Mittels der zweiten Variante des ersten Aspekts der Erfindung lassen sich sogenannte "zweiseitige Lochvarianten", nämlich Wertdokumentsubstrate mit Vorderseiten- und Rückseitenlöchern realisieren, wobei die Löcher (bzw. durchgehende Öffnungen) registergenau oder versetzt angeordnet sein können. So kann beispielsweise die Herstellung eines Wertdokuments mit einem darin eingebetteten Pendelfaden in einfacher Weise bewerkstelligt werden, indem sowohl die erste Schicht, als auch die zweite Schicht mit mehreren durchgehenden Öffnungen bereitgestellt werden und das längliche Sicherheitselement ein Sicherheitsfaden ist. Je nach Anordnung der durchgehenden Öffnungen in der ersten und der zweiten Schicht können die Fensterbereiche des Pendelfadens auf der Vorder- und Rückseite des erhaltenen Wertdokumentsubstrats registergenau oder versetzt angeordnet sein.

Sowohl die erste Schicht, als auch die zweite Schicht, die jeweils eine durchgehende Öffnung aufweisen, werden bevorzugt in Form einer Papierschicht bereitgestellt, die mit Vorteil eine Dicke von mindestens 20 µm hat. In diesem Fall wäre das durch das Verfahren erhaltene Wertdokumentsubstrat ein Papier-mit-Loch/Sicherheitselement/Papier-mit-Loch-Verbund. Es können aber auch sowohl die erste Schicht, als auch die zweite Schicht jeweils in Form einer polymeren Schicht, z.B. als Folie, vorliegen. In diesem Fall wäre das durch das Verfahren erhaltene Wertdokumentsubstrat ein Folie-mit-Loch/Sicherheitselement/Folie-mit-Loch-Verbund. In diesem Fall weisen die jeweils eine durchgehende Öffnung aufweisenden Folien mit Vorteil eine Dicke von mindestens 6 µm auf.

Gemäß einer dritten Variante des ersten Aspekts der Erfindung umfasst das Verfahren zum Herstellen eines mehrlagigen Wertdokuments den Schritt A) des Bereitstellens einer ersten Schicht, einer zweiten Schicht, einer dritten Schicht und eines länglichen Sicherheitselements, wobei jede der ersten Schicht und der zweiten Schicht zumindest eine durchgehende Öffnung aufweisen und von einer polymeren Schicht oder einer Papierschicht gewählt sein können und die dritte Schicht eine polymere Schicht ist, den Schritt B) des Auftragens von Kaschierklebstoff auf eine Oberfläche der ersten Schicht und auf eine Oberfläche der zweiten Schicht, wobei der Kaschierklebstoff auf die erste und zweite Schicht jeweils mittels Kiss-Print aufgetragen wird, und des Auftragens von Kaschierklebstoff auf eine Oberfläche der dritten Schicht, und den Schritt C) des Zusammenkaschierens der ersten Schicht, der zweiten Schicht, der dritten Schicht und des länglichen Sicherheitselements mittels Kaschierwalzen, so dass die zweite Schicht und die dritte Schicht jeweils eine Deckschicht bilden, die erste Schicht eine Zwischenschicht bildet, das längliche Sicherheitselement zwischen der ersten Schicht und der zweiten Schicht eingebettet wird und sowohl die Öffnung der ersten Schicht, als auch die Öffnung der zweiten Schicht jeweils einseitig mit dem länglichen Sicherheitselement verschlossen werden.

In der dritten Variante des ersten Aspekts der Erfindung werden vier Materialien, nämlich drei Substratbahnen und ein längliches Sicherheitselement (z.B. Sicherheitsfaden oder Sicherheitsstreifen) in einem Kaschierspalt eines Kaschierwerks zusammenkaschiert. Triplex-Kaschieranlagen sind im Stand der Technik bekannt (siehe z.B. EP 2 085 218 A2 oder EP 2 085 219 A2). Die Durchführung des Verfahrens gelingt beispielsweise, indem drei Abwickelwalzen für die Substratbahnen bereitgestellt werden, wobei für jede Substratbahn zusätzlich jeweils ein Klebstoffauftragswerk (z.B. eine Klebstoffauftragswalze) vorgesehen wird. Für das längliche Sicherheitselement wird eine Abwickelwalze vorgesehen.

Es wird bevorzugt, die erste Schicht und die zweite Schicht, die jeweils zumindest eine durchgehende Öffnung aufweisen, jeweils als eine Papierschicht mit einer bevorzugten Dicke von mindestens 20µm bereitzustellen und die dritte Schicht als eine polymere Schicht, z.B. eine Folie, bereitzustellen. In diesem Fall wäre das durch das Verfahren erhaltene Wertdokumentsubstrat ein Papier-mit-Loch/Sicherheitselement/Papier-mit-Loch/Folie-Verbund. Es ist aber ebenso möglich, die erste, zweite und dritte Schicht jeweils als eine polymere Schicht, z.B. eine Folie, bereitzustellen. In diesem Fall wäre das durch das Verfahren erhaltene Wertdokumentsubstrat ein Folie-mit Loch/Sicherheitselement/Folie-mit-Loch/Folie-Verbund. Die eine durchgehende Öffnung aufweisenden Folien haben vorzugsweise eine Dicke von mindestens 6 µm.

Ein zweiter Aspekt der Erfindung betrifft ein Wertdokumentsubstrat, das durch das Verfahren gemäß der zweiten oder der dritten Variante des ersten Aspekts der Erfindung erhältlich ist. Das Wertdokumentsubstrat ist insbesondere ein Substratschicht-mit-Loch/Sicherheitselement/Substratschicht-mit-Loch-Verbund, beispielsweise ein Papier-mit-Loch/Sicherheitselement/Papier-mit-Loch-Verbund oder ein Folie-mit-Loch/Sicherheitselement/Folie-mit-Loch-Verbund (siehe die oben erwähnte "zweite Variante") oder ein Substratschicht-mit-Loch/Sicherheitselement/Substratschicht-mit-Loch/Folie-Verbund, beispielsweise ein Papier-mit-Loch/Sicherheitselement/Papier-mit-Loch/Folie-Verbund oder ein Folie-mit Loch/Sicherheitselement/Folie-mit-Loch/Folie-Verbund (siehe die oben erwähnte "dritte Variante").

Ein dritter Aspekt der Erfindung betrifft ein Verfahren zum Herstellen eines Folienverbundes, der zur Herstellung von Wertdokumenten geeignet ist, umfassend
D) das Bereitstellen eines nach dem Verfahren gemäß der zweiten Variante des ersten Aspekts der Erfindung erhältlichen Wertdokumentsubstrats, einer ersten polymeren Schicht und einer zweiten polymeren Schicht,
E) das Auftragen von Kaschierklebstoff auf eine Oberfläche der ersten polymeren Schicht und auf eine Oberfläche der zweiten polymeren Schicht,
F) das Zusammenkaschieren des Wertdokument-Substrats, der ersten polymeren Schicht und der zweiten polymeren Schicht, so dass die erste polymere Schicht und die zweite polymere Schicht jeweils eine Deckschicht bilden und das Wertdokument-Substrat eine Zwischenschicht bildet.

Der nach dem Verfahren gemäß dem dritten Aspekt der Erfindung erhältliche Folienverbund, der zur Herstellung von Wertdokumenten geeignet ist, ist insbesondere ein Folie/Substratschicht-mit-Loch/Sicherheitselement/Substratschicht-mit-Loch/Folie-Verbund, beispielsweise ein Folie/Papier-mit-Loch/Sicherheitselement/Papier-mit-Loch/Folie-Verbund oder ein Folie/Folie-mit-Loch/Sicherheitselement/Folie-mit-Loch/Folie-Verbund.

Ein vierter Aspekt der Erfindung betrifft ein Verfahren zum Herstellen eines Folienverbundes, der zur Herstellung von Wertdokumenten geeignet ist, umfassend
D) das Bereitstellen eines nach dem Verfahren gemäß der dritten Variante des ersten Aspekts der Erfindung erhältlichen Wertdokumentsubstrats und einer polymeren Schicht,
E) das Auftragen von Kaschierklebstoff auf eine Oberfläche der polymeren Schicht,
F) das Zusammenkaschieren des Wertdokument-Substrats und der polymeren Schicht auf solche Weise, dass die im Schritt D) bereitgestellte polymere Schicht und die polymere, dritte Schicht des im Schritt D) bereitgestellten Wertdokument-Substrats jeweils eine Deckschicht bilden.

Der nach dem Verfahren gemäß dem vierten Aspekt der Erfindung erhältliche Folienverbund, der zur Herstellung von Wertdokumenten geeignet ist, ist insbesondere ein Folie/Substratschicht-mit-Loch/Sicherheitselement/Substratschicht-mit-Loch/Folie-Verbund, beispielsweise ein Folie/Papier-mit-Loch/Sicherheitselement/Papier-mit-Loch/Folie-Verbund oder ein Folie/Folie-mit-Loch/Sicherheitselement/Folie-mit-Loch/Folie-Verbund.

Ein fünfter Aspekt der Erfindung betrifft einen Folienverbund zur Herstellung von Wertdokumenten, erhältlich durch das Verfahren gemäß dem dritten oder dem vierten Aspekt der Erfindung.

Ein sechster Aspekt der Erfindung betrifft ein Wertdokument, das ein Wertdokumentsubstrat gemäß dem zweiten Aspekt der Erfindung oder einen Folienverbund gemäß dem fünften Aspekt der Erfindung aufweist.

### Ausführliche Beschreibung der Erfindung

Kaschierklebstoffe zur Herstellung von Folienverbunden oder zur Verklebung von polymeren Schichten mit Papier sind im Stand der Technik bekannt (siehe z.B. DE 196 49 383 A1 und DE 10 2006 031501 A1). Vorzugsweise handelt es sich bei dem Kaschierklebstoff um einen Wasser-, Alkohol- oder UV-vernetzenden Klebstoff. Besonders bevorzugt wird ein Nassklebstoff, insbesondere ein Polyurethanklebstoff, eingesetzt. Klebstoffe auf Basis von Polyurethan(PU)-Prepolymeren verfügen über reaktive Endgruppen, z.B. Endgruppen, die mit Wasser oder anderen Verbindungen, die über ein acides Wasserstoffatom verfügen, reagieren können. Bei sogenannten 2K-Systemen erfolgt die Zugabe des OH-Gruppen-haltigen Härters unmittelbar vor der Applikation. Es ist ebenfalls möglich, Polyurethane mit reaktiven Endgruppen nur durch die Reaktion mir Luftfeuchtigkeit auszuhärten (1K-Systeme). Solche 1K-Systeme weisen gegenüber den 2K-Systemen in der Regel den Vorteil auf, dass für den Anwender das genaue Mischen der viskosen Komponenten vor der Applikation entfällt.

Bei dem erfindungsgemäßen Verfahren wird der Klebstoff zumindest auf das zumindest eine durchgehende Öffnung aufweisende Substrat im Kiss-Print aufgetragen. Insbesondere vorteilhaft ist das Auftragen von Klebstoff auf alle zu kaschierenden Substrate im Kiss-Print. Die Schichtdicke des mittels Kiss-Print erzeugten Klebstoffauftrags liegt im Falle des Auftragens auf Papier insbesondere zwischen 4 µm bis 8 µm. Im Falle des Auftragens auf Folie liegt die Schichtdicke des Klebstoffauftrags insbesondere zwischen 0,1 µm bis 3 µm. Die Applikationstemperatur des Klebstoffes ist von der Art des Klebstoffes abhängig, sie liegt im Falle des Auftragens auf Papier üblicherweise zwischen 80°C bis 100°C. Die Applikationstemperatur des Klebstoffes liegt im Falle des Auftragens auf Folie üblicherweise zwischen 20°C bis 50°C. Die Viskosität bei Applikationstemperatur beträgt üblicherweise zwischen 100mPas bis 10000mPas, bevorzugt bis zu 5000mPas, insbesondere zwischen 200mPas und 3000mPas, gemessen mit einem Brookfield-Viskosimeter RVT Spindel 27, nach EN ISO 2555. Die Auftragsmenge des Klebstoffs liegt im Falle des Auftragens auf Papier bevorzugt zwischen 2 g/m² bis 9 g/m². Die Auftragsmenge des Klebstoffs liegt im Falle des Auftragens auf Folie bevorzugt zwischen 0,1 g/m² bis 3 g/m².

Für das Kaschieren von Folie auf Folie werden vorzugsweise zweikomponentige Klebstoffe (z.B. Isocyanat/Polyol-Systeme) eingesetzt, weil einkomponentige Klebstoffe feuchtigkeitsvernetzend sind und die Folien wie Dampfsperren wirken. Der Klebstoffauftrag im Kiss-Print liegt mit Vorteil zwischen 0,1 bis 3 g/m². Dies ist wegen der homogenen, nicht saugenden Oberfläche möglich und aus optischen Gründen sinnvoll. Für das Kaschieren von Papier auf Papier oder von Papier auf Folie wird vorzugsweise ein einkomponentiger Klebstoff verwendet, weil hiermit die besten Beständigkeiten erhalten werden können. Theoretisch kann auch ein zweikomponentiges, eher hochviskoses sogenanntes "Heißsystem" eingesetzt werden. Das Auftragsgewicht beträgt bei Papier vorzugsweise 2 bis 9 g/m², ist also etwas höher, was mit der unruhigen, saugfähigen Papieroberfläche zusammenhängt.

Zweikomponentige Klebstoffe, sogenannte "Kaltsysteme", werden vorzugsweise zwischen 20 bis 50°C appliziert. Diese werden bevorzugt für das Kaschieren von Folie auf Folie eingesetzt. Zweikomponentige Klebstoffe, sogenannte "Heißsysteme", werden vorzugsweise bei Temperaturen zwischen 80°C bis 100°C appliziert. Einkomponentige Klebstoffe werden vorzugsweise für das Kaschieren von Papier auf Papier oder Papier auf Folie eingesetzt und sind üblicherweise hochviskos. Entsprechend werden diese Klebstoffe bei 80°C bis 100°C appliziert.

Für das erfindungemäße Verfahren werden die Substratschichten, z.B. Polymerfolien und/oder Papierschichten, und das längliche Sicherheitselement, z.B. ein Sicherheitsfaden oder -streifen, üblicherweise in Rollen bereitgestellt. Es kann sich bei den Substratschichten bereits um bedruckte Substratschichten handeln. Es ist jedoch auch möglich, den Druckvorgang unmittelbar vor dem Verkleben durchzuführen. Die Substratschichten können an ihrer Oberfläche ggf. gereinigt werden, bei Bedarf kann auch eine Oberflächenvorbehandlung, z.B. eine Corona-Behandlung durchgeführt werden.

An die Art der im erfindungsgemäßen Verfahren verwendbaren Papierschicht sind keine Bedingungen geknüpft, so dass übliche Papiere aus Fasern von Einjahrespflanzen, insbesondere Baumwollfasern oder Zellstofffasern, verwendet werden können, aber auch Papiere, die zumindest teilweise aus Kunststofffasern, vorzugsweise Polyamidfasern, bestehen. Durchgehende Öffnungen können durch Stanzen, Laserschnitt oder papiermacherisch in der Papierschicht erzeugt werden. Vorzugsweise wird die Papierschicht auf einer Rundsiebmaschine hergestellt.

Die Papierschicht kann zusätzlich mit Sicherheitsmerkmalen ausgestattet werden, um das Nachstellen des Wertdokumentsubstrats zu erschweren.

Dabei können die Sicherheitsmerkmale auf die Papierschicht aufgebracht wie auch in das Volumen der Papierschicht eingebracht werden.

Will man die Sicherheitsmerkmale in das Volumen des Sicherheitspapiers einbringen, werden die in Betracht kommenden Merkmale vorzugsweise bereits bei der Papierherstellung in die Papiermasse eingebracht.

Als klassisches Sicherheitsmerkmal wird insbesondere ein Wasserzeichen in die Papierschicht eingearbeitet. Bei einem in das Papiervolumen eingebrachten Sicherheitsmerkmal kann es sich um einen Merkmalsstoff mit einer visuell und/oder maschinell nachweisbaren physikalischen Eigenschaft handeln. Der Stoff kann beispielsweise magnetische, elektrisch leitfähige, lumineszierende, lichtbeugende, lichtpolarisierende, photochrome, thermochrome oder lichtinterferierende Eigenschaften aufweisen und kann vollflächig gleichmäßig verteilt vorliegen oder in Form von Mustern eingebracht werden. Bei den lumineszierenden Merkmalsstoffen kann es sich beispielsweise um Lumineszenzstoffe handeln, die mit UV-Licht anregbar sind und im visuellen Spektralbereich emittieren. Im Falle einer maschinellen Überprüfung können jedoch auch im unsichtbaren Spektralbereich, vorzugsweise im IR-Spektralbereich, emittierende Lumineszenzstoffe verwendet werden.

Neben den in das Volumen eingebrachten Sicherheitsmerkmalen lassen sich Sicherheitsmerkmale auch auf die Papieroberfläche vorzugsweise als Aufdruck aufbringen. Dabei kann eine Seite, aber selbstverständlich auch beide Oberflächen der Papierschicht mit Sicherheitsmerkmalen ausgerüstet werden.

Hierbei kann es sich zum einen um die oben angesprochenen visuell und/ oder maschinell detektierbaren Sicherheitsmerkmale handeln. Zum anderen eignet sich besonders der Stichtiefdruck, der beim Druckvorgang ein typisches Relief auf dem Bedruckstoff erzeugt, das leicht ertastbar ist. Bei Beschichtung mit einer möglichst dünnen Folie ist das Relief im Papier trotz Folie ertastbar. Der Stichtiefdruck kann farbführend und/oder als Blindprägung ausgeführt sein.

Ebenso können optisch variable Sicherheitselemente auf dem Papier vorgesehen werden. Optisch variable Elemente bzw. Druckfarben, die aufgrund von Lichtbeugung oder -interferenz ein betrachtungswinkelabhängiges Farbspiel zeigen, benötigen für eine gute Sichtbarkeit dieses Effekts einen möglichst glatten Untergrund, so dass bei Anwendung auf Papier dieses oftmals erst mit einer Primerschicht vorbehandelt werden muss. Sicherheitselemente dieser Art sind beispielsweise Hologramme, Kinegrame^{®} oder andere Beugungsstrukturen, folienartige Flüssigkristall- oder Interferenzschichtaufbauten, aber auch Druckfarben, die Interferenzschicht- oder Flüssigkristallpigmente oder andere Effektpigmente, wie glänzende Metalleffektfarbpigmente, enthalten. Auch einfache Metallschichten oder Metalleffektaufdrucke sind denkbar.

Die auf mindestens eine Oberfläche des Papiers aufgebrachten Sicherheitsmerkmale können auch in Form einer Codierung vorliegen. Dies bietet sich insbesondere bei aufgedruckten Sicherheitselementen an.

Durch die Verwendung mehrerer Merkmalsstoffe und/oder eine Variation der Konzentration eines oder mehrerer Merkmalsstoffe in entsprechenden Druckfarben können sehr einfach beliebige Codierungen, beispielsweise in Form eines Barcodes, auf dem Sicherheitspapier erzeugt werden. Diese Codierung kann beispielsweise ein eigenständiges zusätzliches Sicherheitsmerkmal darstellen oder als Vergleichsmerkmal für andere bereits auf dem Sicherheitspapier vorgesehene Daten dienen. So können auf der Banknote visuell sichtbare Informationen, wie beispielsweise die Denomination, der Name einer im Portrait dargestellten Person oder dergleichen, verschlüsselt und in Form der Codierung für das Auge unsichtbar auf dem Papier abgelegt werden. Bei einer maschinellen Überprüfung wird die Codierung gelesen, entschlüsselt und mit der entsprechenden, visuell sichtbaren Information auf Identität geprüft.

Weiterhin besteht die Möglichkeit, mittels Laser Informationen in das Papier einzuschreiben. Je nach Intensität der Laserenergie können unterschiedliche graue, braune und schwarze Schattierungen erzeugt werden, mit denen insbesondere Portraits dargestellt werden können. Alternativ sind auch Mikroschriftzüge, bei denen die einzelnen Buchstaben maximale Abmessungen von 100 µm aufweisen, machbar.

Die zumindest teilweise Abdeckung der Papierschicht mit einer polymeren Schicht, z.B. einer Folie, verhindert den offenen Zugriff auf die Sicherheitsmerkmale, die in oder auf die Papierschicht ein- bzw. aufgebracht sind, so dass die Fälschungssicherheit erheblich erhöht wird.

Bei der im erfindungsgemäßen Verfahren verwendbaren polymeren Schicht handelt es sich insbesondere um eine Polymer- bzw. Kunststofffolie, vorzugsweise aus Polyethylenterephthalat PET oder Polypropylen, insbesondere orientiertem Polypropylen OPP. Selbstverständlich ist auch jedes andere geeignete Kunststoffsubstrat einsetzbar, z.B. Folien aus Polyester, Polyamid, Polycarbonat, Polyethylen, koextrudierte Folien, darüber hinaus auch Aluminiumfolien. Je nach Anwendung können die Folien mattiert oder glänzend ausgeführt sein. Eine spezielle Variante des Matt-/Glanz-Effektes auf einer Folie kann z.B. dadurch erzeugt werden, dass eine glänzende Folie in bestimmten Bereichen mit einem Resistlack beschichtet wird, dann eine Ätzung der Folienoberfläche erfolgt und anschließend der Resistlack entfernt wird. Im Bereich des ursprünglich aufgebrachten Resistlackes ist die Folie weiterhin glänzend, während in den Bereichen ohne Resistlack die Oberfläche angeätzt und daher matt erscheint.

Die Folien dienen unter anderem der Verbesserung der mechanischen Festigkeit des Wertdokumentsubstrats. Um diese weiter zu steigern, insbesondere auch um die Einreißfestigkeit zu verbessern, können die eingesetzten Folien eine unterschiedliche Reckung aufweisen. Insbesondere die auf unterschiedlichen Seiten der Papierschicht aufgebrachten Folien erhöhen deutlich den Einreißwiderstand, wenn sie eine unterschiedliche Reckung aufweisen. Neben der Fähigkeit, die mechanische Stabilität und Schmutzabweisung eines Wertdokumentsubstrats zu erhöhen, können die Folien bei entsprechender Ausrüstung mit Sicherheitsmerkmalen auch entscheidend zu einer verbesserten Fälschungssicherheit beitragen.

Die Folien lassen sich wie auch die Papierschicht mit Sicherheitsmerkmalen ausrüsten, die auf die Folienoberfläche aufgebracht und/oder in das Volumen der Folie eingebracht werden.

Bei einem in das Folienvolumen eingebrachten Sicherheitsmerkmal kann es sich um einen Merkmalsstoff mit einer visuell und/oder maschinell nachweisbaren physikalischen Eigenschaft handeln. Der Stoff kann beispielsweise magnetische, elektrisch leitfähige, lumineszierende, lichtbeugende, lichtpolarisierende, photochrome, thermochrome oder lichtinterferierende Eigenschaften aufweisen und kann vollflächig gleichmäßig verteilt vorliegen oder in Form von Mustern eingebracht werden. Bei den lumineszierenden Zusatzstoffen kann es sich beispielsweise um Lumineszenzstoffe handeln, die mit UV-Licht anregbar sind und im visuellen Spektralbereich emittieren. Im Falle einer maschinellen Überprüfung können jedoch auch im unsichtbaren Spektralbereich, vorzugsweise im IR-Spektralbereich emittierende Lumineszenzstoffe verwendet werden.

Bei auf die Oberfläche der Folie aufgebrachten Sicherheitsmerkmalen kann das Sicherheitsmerkmal dabei auf der dem Papier abgewandten Seite und/ oder dem Papier zugewandten Seite zu liegen kommen. Bei einem Dreischichtsubstrat würde demnach das Sicherheitsmerkmal auf einer Oberfläche der Folie entweder auf der Außenseite des Substrates oder auf der Innenseite vorliegen. Insbesondere Sicherheitsmerkmale, die einen weniger festen Verbund mit der Folie eingehen, kommen vorzugsweise auf der Innenseite des Verbundes zu liegen, so dass die schlechte Zugänglichkeit eine Fälschung erschwert.

Bei den auf die Oberfläche der Folie aufgebrachten Sicherheitsmerkmalen kann es sich um die oben angesprochenen visuell und/oder maschinell detektierbaren Sicherheitsmerkmale handeln.

Ebenso können optisch variable Sicherheitselemente auf der Folie vorgesehen werden. Optisch variable Elemente bzw. Druckfarben, die aufgrund von Lichtbeugung oder -interferenz ein betrachtungswinkelabhängiges Farbspiel zeigen, benötigen für eine gute Sichtbarkeit dieses Effekts einen möglichst glatten Untergrund, wie ihn insbesondere Folien bieten. Sicherheitselemente dieser Art sind beispielsweise Hologramme, Kinegrame^{®} oder andere Beugungsstrukturen, folienartige Flüssigkristall- oder Interferenzschichtaufbauten, aber auch Druckfarben, die Interferenzschicht- oder Flüssigkristallpigmente oder andere Effektpigmente, wie glänzende Metalleffektfarbpigmente, enthalten. Auch einfache Metallschichten oder Metalleffektaufdrucke sind denkbar.

Die auf der Folie aufgebrachten Sicherheitsmerkmale können auch in Form einer Codierung vorliegen, wie sie bereits ausführlich in Zusammenhang mit der Papierschicht beschrieben ist.

Als Sicherheitsmerkmal, das auf die Oberfläche der Folie aufgebracht werden kann, dient z.B. auch ein spezieller Aufdruck.

Insbesondere eignet sich als spezieller Aufdruck der Stichtiefdruck, bei dem eine leicht ertastbare Reliefoberfläche erzeugt wird. Der Druck kann dabei zum einen auf das fertig kaschierte mehrschichtige Substrat erfolgen, so dass der fertig laminierte Verbund somit wie ein konventionelles Sicherheitspapier verarbeitet und bedruckt werden kann. Der Stichtiefdruck kann farbführend und/oder als Blindprägung ausgeführt werden.

Zum anderen kann die Folie, noch bevor sie in den Verband eingearbeitet wird, separat bedruckt werden und erst nach dem Druckvorgang auf die Papierschicht aufgebracht werden.

Wie im Zusammenhang mit der Papierschicht ausgeführt, können auch in die Folie Informationen mittels Laser eingeschrieben werden.

Aus den optisch variablen Elementen bzw. Druckfarben eignen sich insbesondere Metallisierungen der Folie, eventuell in Kombination mit Beugungsstrukturen. Die Metallisierung kann dabei opak oder semitransparent ausgeführt sein, wobei die Semitransparenz durch sehr dünne Metallschichten oder durch Rasterung der Metallschicht erreicht wird. Unter "Semitransparenz" ist hierbei Transluzenz zu verstehen, d.h. die Metallisierung weist üblicherweise eine Lichtdurchlässigkeit von unter 90 %, vorzugsweise zwischen 80 % und 20 % auf. Weiterhin besteht die Möglichkeit, unterschiedlich farbige Metallisierungen zu verwenden bzw. zu kombinieren. Insbesondere eignet sich zur Metallisierung Aluminium und/oder Kupfer. Die auf die Folie direkt aufgebrachte Metallisierung zeigt den entscheidenden Vorteil außergewöhnlich hoher Brillanz. Dies ist auf die äußerst glatte Oberfläche der Folie zurückzuführen, die besonders gerichtete Reflexionen im Sicherheitsmerkmal zulässt. Im Gegensatz hierzu wirken derartige Metallisierungen auf Papier immer trüber, da die Unebenheiten im Papier Störungen bei der Reflexion verursachen.

Diese hochreflektierenden Metallisierungen der Folie werden vorzugsweise nur partiell mit dem so genannten Waschverfahren, wie in der WO 99/13157 beschrieben, erzeugt, auf die ausdrücklich Bezug genommen wird.

Werden die Metallisierungen zusätzlich mit z.B. geprägten Beugungsstrukturen versehen, ergeben sich außergewöhnlich brillante holographische Effekte, die auf herkömmliche Art nicht zu erzeugen sind.

Besonders fälschungssicher sind derartige Sicherheitsmerkmale, wenn die Folie auf das Papier so aufgebracht wird, dass die Sicherheitsmerkmale auf der Innenseite des Laminats zu liegen kommen und so von außen nicht zugänglich sind.

Das im erfindungsgemäßen Verfahren verwendbare längliche Sicherheitselement kann z.B. ein Sicherheitsfaden oder Sicherheitsstreifen sein. Das Sicherheitselement kann auf seiner Vorderseite und auf seiner Rückseite entweder mit gleichartigen oder mit unterschiedlichen optischen Effekten bereitgestellt sein. Darüber hinaus kann das Sicherheitselement optional auf einer seiner Oberflächen einen Heißsiegelklebstoff aufweisen.

Mit Vorteil kann der Sicherheitsstreifen auf der einen Seite einen Holographieeffekt und auf der gegenüberliegenden Seite einen Farbkippeffekt, optional einen partiellen Durchsichtseffekt zeigen. Ein konkreter Schichtaufbau eines solchen Sicherheitsstreifens umfasst die Schichtenfolge Metall/Prägelack/Trägerfolie/Metall/SiO₂-Schicht/Metall. Beidseitig kann ein sogenannter Cleartext z.B. mittels eines Waschfarbendruckes, eines Ätzprozesses oder durch reaktive Brausewaschfarben realisiert werden. Darüber hinaus kann ein Cleartext auch durch eine deckende Druckfarbe imitiert werden, z.B. durch ein deckendes Weiß oder eine sonstige opake Farbe, die vor oder nach der Metallisierung aufgedruckt wird.

Neben Hologrammen und Farbkippeffekten sind auch weitere optische bzw. mikrooptische Merkmale wie Moire-Magnifier, Durchsichtseffekte u.s.w. kombinierbar, so dass auf beiden Seiten des länglichen Sicherheitselements gleichartige oder unterschiedliche optische Effekte realisierbar sind. Bei Bedarf können Folienprimer, z.B. zur Haftvermittlung, eingesetzt werden. Metallschichten können mittels Metallisierung (z.B. Al, Cu, Sn, Ag, Cr, Au und Legierungen hiervon), aber auch durch metallpigmentierte Farbschichten erzeugt werden.

Denkbar sind auch Sicherheitsstreifen mit einem beidseitig identischen Hologramm, wobei einseitig ein Farbkippeffekt sichtbar ist Ein solcher Sicherheitsstreifen umfasst z.B. die Schichtenfolge Trägerfolie/Prägelack/Aluminium/SiO₂-Schicht/Chrom.

Des Weiteren können Sicherheitsstreifen mit beidseitig unterschiedlichen Hologrammen, Cleartext und Magnetausstattung eingesetzt werden. Ein solcher Sicherheitsstreifen umfasst z.B. die Schichtenfolge Aluminium/Prägelack/Deckweiß/Magnetfarbe/Deckweiß/Trägerfolie/Prägelack/ Aluminium/SiO₂-Schicht/Chrom/Fixfarbe.

Das im erfindungsgemäßen Verfahren verwendbare längliche Sicherheitselement ist vorzugsweise ohne Heißsiegelkleber ausgestattet und wird direkt in einem Kaschiervorgang zwischen bzw. in den Kaschierklebstoff eingebettet.

Die Erfindung wird nachstehend anhand von bevorzugten Ausführungsformen in Verbindung mit den beigefügten Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung eines Wertdokumentsubstrats, das durch das Verfahren gemäß dem ersten Aspekt der Erfindung erhältlich ist;
- Fig. 2: eine schematische Darstellung eines Wertdokumentsubstrats, das durch das Verfahren gemäß der ersten Variante des ersten Aspekts der Erfindung erhältlich ist;
- Fig. 3: eine schematische Darstellung eines Wertdokumentsubstrats, das durch das Verfahren gemäß der zweiten Variante des ersten Aspekts der Erfindung erhältlich ist;
- Fig. 4: eine schematische Darstellung eines Wertdokumentsubstrats, das durch das Verfahren gemäß der dritten Variante des ersten Aspekts der Erfindung erhältlich ist;
- Fig. 5: eine schematische Darstellung eines Folienverbundes, der durch das Verfahren gemäß dem dritten oder dem vierten Aspekt der Erfindung erhältlich ist;
- Fig. 6: ein konkretes Ausführungsbeispiel eines Verfahrens zur Herstellung eines Wertdokumentsubstrats gemäß der ersten Variante des ersten Aspekts der Erfindung;
- Fig. 7a, b: die Vorder- und Rückseite eines Wertdokumentsubstrats, das durch das in Fig. 6 gezeigte Verfahren gemäß der ersten Variante des ersten Aspekts der Erfindung erhältlich ist;
- Fig. 8: ein konkretes Ausführungsbeispiel eines Verfahrens zur Herstellung eines Wertdokumentsubstrats gemäß der dritten Variante des ersten Aspekts der Erfindung;
- Fig. 9: ein konkretes Ausführungsbeispiel eines Verfahrens zur Herstellung eines Folienverbundes gemäß dem dritten Aspekt der Erfindung;
- Fig.10: eine weitere schematische Darstellung eines Wertdokumentsubstrats, das durch das Verfahren gemäß der ersten Variante des ersten Aspekts der Erfindung erhältlich ist; und
- Fig. 11: eine weitere schematische Darstellung eines Wertdokumentsubstrats, das durch das Verfahren gemäß der ersten Variante des ersten Aspekts der Erfindung erhältlich ist.

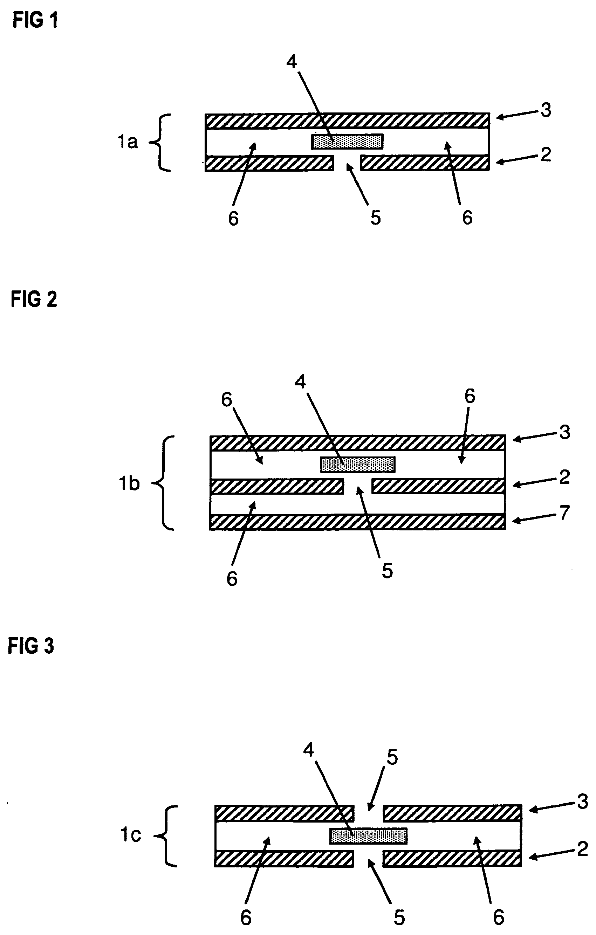

Fig. 1 zeigt eine schematische Darstellung eines Wertdokumentsubstrats 1a, das durch das Verfahren gemäß dem ersten Aspekt der Erfindung erhältlich ist. Das Substrat 1a umfasst zwei Substratschichten, nämlich eine z.B. 72g/m² schwere Papierschicht als eine erste Schicht 2, die eine durchgehende Öffnung 5 aufweist, und eine 6µm dicke, aus Polyethylenterephthalat gebildete Polymerfolie als zweite Schicht 3. Zwischen den beiden Substratschichten 2 und 3 ist ein Sicherheitsfaden 4 eingebettet, der die Öffnung 5 der ersten Schicht einseitig verschließt. Die beiden Substratschichten 2, 3 und der dazwischen eingebettete Sicherheitsfaden 4 sind mittels Kaschierkleber 6 zusammenkaschiert. Ein solcher "Triplexverbund" ("Triplex", weil der Verbund drei Materialien aufweist) ist mittels einer Triplex-Kaschieranlage aus dem Stand der Technik erhältlich. Eine prozesssichere Kaschierung ohne Verschmutzung der Anlage wird durch das Auftragen von Kaschierklebstoff 6 zumindest auf die erste Schicht 2 im Kiss-Print gewährleistet. Eine Steigerung der Prozesssicherheit des Kaschierverfahrens wird erreicht, wenn die Dicke der ersten Papierschicht 2 mindestens 20µm beträgt.

Fig. 2 zeigt eine schematische Darstellung eines Wertdokumentsubstrats 1b, das durch das Verfahren gemäß der ersten Variante des ersten Aspekts der Erfindung erhältlich ist. Anders als das in Fig. 1 gezeigte Wertdokumentsubstrat ist das in Fig. 2 gezeigte Substrat ein "Quadruplexverbund", der vier Materialien aufweist, nämlich eine z.B. 72g/m² schwere Papierschicht als eine erste Schicht 2 mit einer durchgehenden Öffnung 5, zwei jeweils 6µm dicke, aus Polyethylenterephthalat gebildete Polymerfolien als zweite Schicht 3 bzw. dritte Schicht 7, und ein Sicherheitsfaden 4, der zwischen der ersten Schicht 2 und der zweiten Schicht 3 eingebettet ist. Die zweite Schicht 3 und die dritte Schicht 7 bilden jeweils eine Deckschicht. Triplex-Kaschieranlagen sind im Stand der Technik bekannt (siehe z.B. EP 2 085 218 A2 oder EP 2 085 219 A2). Die Durchführung des Verfahrens gelingt beispielsweise, indem drei Abwickelwalzen für die drei Substratbahnen bereitgestellt werden, wobei für die Substratbahnen zusätzlich jeweils ein Klebstoffauftragswerk (z.B. eine Klebstoffauftragswalze) vorgesehen wird. Für das längliche Sicherheitselement wird eine Abwickelwalze vorgesehen. Voraussetzung für eine problemlose Kaschierung ohne Verschmutzung der Anlage ist ein Auftragen von Kaschierklebstoff 6 zumindest auf die erste Schicht 2 im Kiss-Print. Eine Steigerung der Prozesssicherheit des Kaschierverfahrens wird erreicht wenn die erste Papierschicht 2 eine Dicke von mindestens 20µm hat.

Fig. 3 zeigt eine schematische Darstellung eines Wertdokumentsubstrats 1c, das durch das Verfahren gemäß der zweiten Variante des ersten Aspekts der Erfindung erhältlich ist. Das gezeigte Wertdokumentsubstrat ist ein Triplexverbund, der drei Materialien umfasst, nämlich zwei jeweils z.B. 72g/m² schwere Papierschichten als eine erste Schicht 2 und eine zweite Schicht 3, von denen jede eine durchgehende Öffnung 5 aufweist, und ein dazwischen eingebetteter Sicherheitsfaden 4. Ein solcher Triplexverbund ist mittels einer Triplex-Kaschieranlage aus dem Stand der Technik erhältlich. Voraussetzung für eine problemlose Kaschierung ohne Verschmutzung der Anlage ist ein Auftragen von Kaschierklebstoff 6 im Kiss-Print sowohl auf die erste Schicht 2, als auch auf die zweite Schicht 3. Das Wertdokumentsubtrat 1c ist ein Beispiel für eine zweiseitige Lochvariante, nämlich ein Wertdokument-substrat mit einem Vorderseiten- und Rückseitenloch, wobei die Löcher bzw. Öffnungen 5 registergenau angeordnet sind. In einer Variante können die durchgehenden Öffnungen 5 versetzt angeordnet sein, so dass sie bei der Betrachtung des Wertdokuments 1c in Draufsicht teilweise überlappen oder gar nicht überlappen. Eine Steigerung der Prozesssicherheit des Kaschierverfahrens wird erreicht, wenn jede der ersten Papierschicht 2 und der zweiten Papierschicht 3 eine Dicke von mindestens 20µm besitzen.

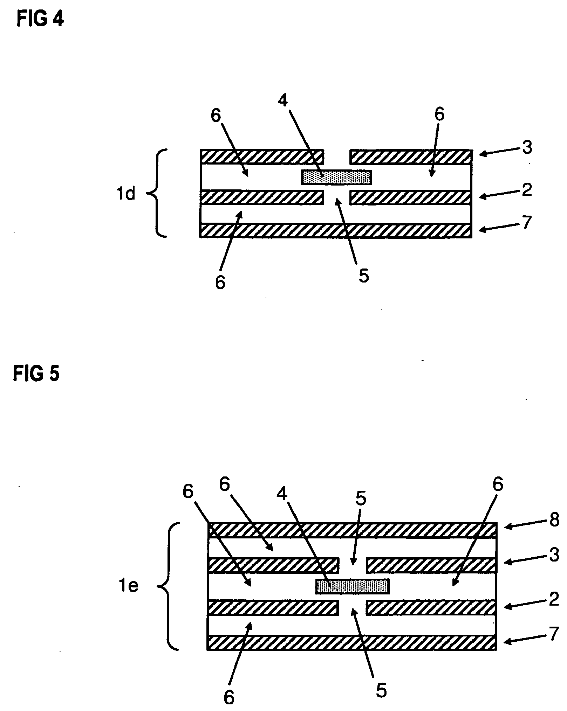

Fig. 4 zeigt eine schematische Darstellung eines Wertdokumentsubstrats 1d, das durch das Verfahren gemäß der dritten Variante des ersten Aspekts der Erfindung erhältlich ist. Anders als das in Fig. 3 gezeigte Wertdokumentsubstrat ist das in Fig. 4 gezeigte Substrat ein Quadruplexverbund mit vier Materialien, nämlich zwei jeweils z.B. 72g/m² schweren Papierschichten als eine erste Schicht 2 und eine zweite Schicht 3, von denen jede eine durchgehende Öffnung 5 aufweist, einem dazwischen eingebetteten Sicherheitsfaden 4 und einer 6µm dicken, aus Polyethylenterephthalat gebildeten Polymerfolie als eine dritte Schicht 7. Die zweite Schicht 3 und die dritte Schicht 7 bilden jeweils eine Deckschicht. Voraussetzung für eine problemlose Kaschierung ohne Verschmutzung der Kaschieranlage ist ein Auftragen von Kaschierklebstoff 6 im Kiss-Print zumindest auf die erste Schicht 2 und die zweite Schicht 3. Eine Steigerung der Prozesssicherheit des Kaschierverfahrens wird erreicht, wenn jede der ersten Papierschicht 2 und der zweiten Papierschicht 3 eine Dicke von mindestens 20µm aufweisen.

Fig. 5 zeigt eine schematische Darstellung eines Folienverbundes 1e, der durch das Verfahren gemäß dem dritten oder dem vierten Aspekt der Erfindung erhältlich ist. Startmaterial für die Herstellung des Folienverbundes 1e ist entweder der in Fig. 3 gezeigte Triplexverbund 1c oder der in Fig. 4 gezeigte Quadruplexverbund 1d.

Im Falle des Triplexverbundes 1c als Startmaterial werden zwei 6µm dicke, aus Polyethylenterephthalat gebildete Polymerfolien 7 und 8 bereitgestellt. Jede der Polymerfolien 7 und 8 wird auf einer Oberfläche mit Kaschierklebstoff versehen und mit dem Triplexverbund 1c so zusammenkaschiert, dass die beiden Polymerfolien 7, 8 jeweils eine Deckschicht bilden.

Im Falle des Quadruplexverbundes 1d als Startmaterial wird eine 6µm dicke, aus Polyethylenterephthalat gebildete Polymerfolie 8 bereitgestellt. Eine Oberfläche der Polymerfolie 8 wird mit Kaschierklebstoff versehen und mit dem Triplexverbund 1c so zusammenkaschiert, dass die beiden Polymerfolien 7, 8 jeweils eine Deckschicht bilden.

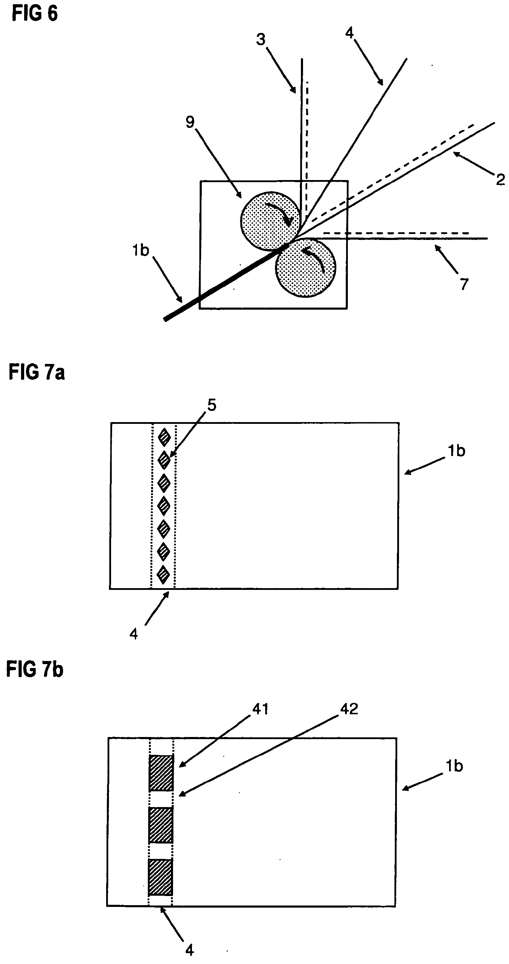

Fig. 6 zeigt ein konkretes Ausführungsbeispiel eines Verfahrens zur Herstellung des in Fig. 2 dargestellten Wertdokumentsubstrats 1b. Die Kaschierung der mit durchgehenden Öffnungen versehenen Papierschicht 2, des Sicherheitsfadens 4 und der beiden Polymerfolien 3, 7 wird mittels einer Kaschieranlage 9 durchgeführt. Die Kaschieranlage besteht aus zwei Kaschierwalzen, die das Zusammenführen der Substratschichten und des Sicherheitsfadens durch Druck unterstützen können. Der Druck kann hierbei zwischen 1 bar und 15 bar, bevorzugt 2 bis 8 bar, betragen. Bei dem Verfahren wird Kaschierklebstoff (der in Fig. 6 als eine gestrichelte Linie gezeigt ist) auf die beiden Polymerfolien 3, 7 und auf die mit durchgehenden Öffnungen versehene Papierschicht 2 aufgetragen. Das Auftragen von Kaschierklebstoff auf die mit Öffnungen versehene Papierschicht 2 muss hierbei im Kiss-Print erfolgen, damit ein Durchquetschen bzw. Ablegen von Klebstoff durch die Öffnung der Papierschicht 2 vermieden wird. Das Auftragen von Kaschierklebstoff auf die Polymerfolien 3, 7 muss nicht zwingend im Kiss-Print durchgeführt werden, sondern kann ebenso durch Sprühen, Rakeln, Drucken, Rollenauftrag oder curtain coating bewerkstelligt werden. Ein Auftragen von Kaschierklebstoff auf die Polymerfolien 3, 7 im Kiss-Print ist aber besonders vorteilhaft.

Ein in Fig. 2 gezeigtes Wertdokumentsubstrat 1b, das durch das in Fig. 6 beschriebene Verfahren erhältlich ist, kann z.B. die in Fig. 7 gezeigten Eigenschaften aufweisen, wobei Fig. 7a das Wertdokumentsubstrat 1b in vorderseitiger Draufsicht zeigt und Fig. 7b das Wertdokumentsubstrat 1b in rückseitiger Draufsicht zeigt. Die Umrisse des in den Verbund eingebetteten Sicherheitsfadens 4 ist in Form von punktierten Linien angedeutet. Anhand von Fig. 7a ist zu erkennen, dass die zentrale Papierschicht 2 des in Fig. 2 gezeigten Wertdokumentsubstrats 1b mehrere durchgehende Öffnungen 5 aufweist, wobei die Öffnungen 5 jeweils die Form einer Raute besitzen. Der in das Wertdokumentsubstrat 1b eingebettete Sicherheitsfaden 4 ist für den Betrachter in vorderseitiger Draufsicht durch die Öffnungen 5 hindurch visuell erfassbar. Bei Betrachtung des Wertdokumentsubstrats 1b in rückseitiger Draufsicht nimmt der Betrachter den in das Wertdokumentsubstrat 1b eingebetteten Sicherheitsfaden 4 in der in Fig. 7b dargestellten Weise wahr. In dem in Fig. 7b gezeigten Beispiel sind die für den Betrachter wahrnehmbaren Bereiche 41 des Sicherheitsfadens 4 durch z.B. deckend weiße Zwischenbereiche 42 getrennt. Die Zwischenbereiche 42 des Sicherheitsfadens 4 können, wie weiter oben erläutert wurde, durch Aufdrucken von Deckweiß oder einer sonstigen opaken Farbe auf die Metallisierung des Sicherheitsfadens erzeugt werden.

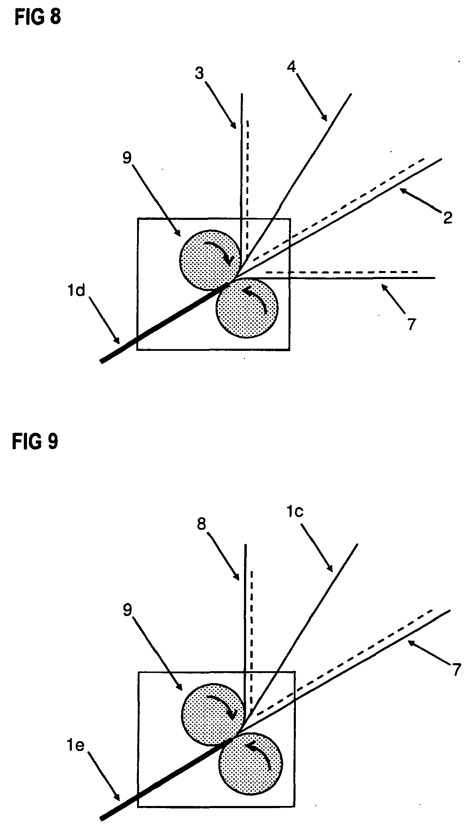

Fig. 8 zeigt ein konkretes Ausführungsbeispiel eines Verfahrens zur Herstellung des in Fig. 4 dargestellten Wertdokumentsubstrats 1d. Die Kaschierung der beiden mit durchgehenden Öffnungen versehenen Papierschichten 2, 3, des Sicherheitsfadens 4 und der Polymerfolie 7 wird mittels einer Kaschieranlage 9 durchgeführt. Die Kaschieranlage 9 hat den im Zusammenhang mit der Fig. 6 beschriebenen Aufbau. Bei dem Verfahren wird Kaschierklebstoff (der in Fig. 8 als eine gestrichelte Linie gezeigt ist) auf die beiden Papierschichten 2, 3 und auf die Polymerfolie 7 aufgetragen. Das Auftragen von Kaschierklebstoff auf die mit Öffnungen versehenen Papierschichten 2,3 muss hierbei im Kiss-Print erfolgen, damit ein Durchquetschen bzw. Ablegen von Klebstoff durch die Öffnungen der Papierschichten 2,3 vermieden wird. Das Auftragen von Kaschierklebstoff auf die Polymerfolie 7 muss nicht zwingend im Kiss-Print durchgeführt werden, sondern kann ebenso durch Sprühen, Rakeln, Drucken, Rollenauftrag oder curtain coating bewerkstelligt werden. Ein Auftragen von Kaschierklebstoff auf die Polymerfolie 7 im Kiss-Print ist aber besonders vorteilhaft.

In dem in Fig. 8 gezeigten Beispiel ist die Verwendung der Polymerfolie 7 lediglich optional. Das Weglassen der Polymerfolie 7 in dem in Fig. 8 gezeigten Beispiel würde zur Herstellung des in Fig. 3 gezeigten Wertdokument-substrats 1c führen. Ausgehend vom Wertdokumentsubstrat 1c lässt sich gemäß der in Fig. 9 gezeigten Vorgehensweise mittels Kaschierung mit zwei Polymerfolien 7,8 der in Fig. 5 dargestellte Folienverbund 1e herstellen. Die beiden Polymerfolien 7, 8 werden vor dem Zusammenkaschieren mit dem Substrat 1c im Walzenspalt mit Kaschierkleber (der in Fig. 9 als eine gestrichelte Linie gezeigt ist) versehen.

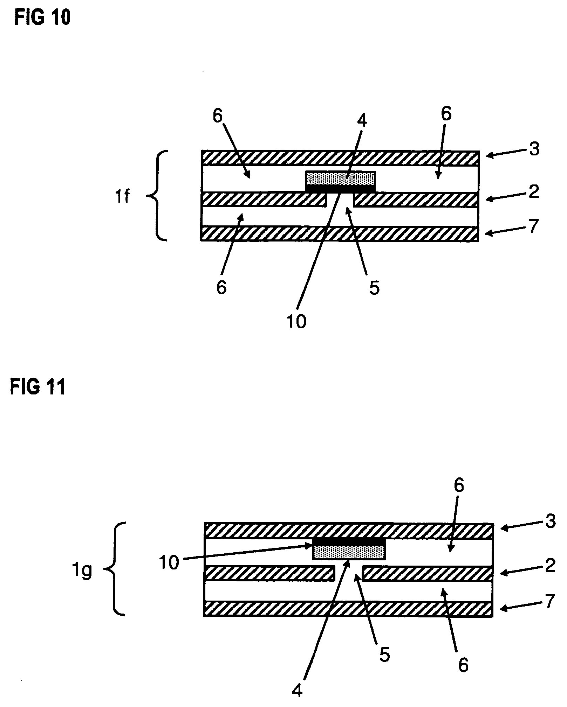

Figuren 10 und 11 zeigen alternative Ausführungsbeispiele für das in Fig. 2 gezeigte Wertdokumentsubstrat 1b. Hierbei weist der Sicherheitsfaden 4 entweder auf seiner in Richtung der Papierschicht 2 weisenden Oberfläche, oder auf seiner in Richtung der Polymerfolie 3 weisenden Oberfläche einen Heißsiegelklebstoff 10 auf. Im Hinblick auf die Beständigkeit des erhaltenen Wertdokumentsubstrats ist die in Fig. 10 gezeigte Variante, bei der die Applikation des Sicherheitselement 4 innen liegend erfolgt, vorteilhaft.

In den in Figuren 1 bis 11 gezeigten Ausführungsbeispielen wurde für die mit durchgehenden Öffnungen versehene Substratschicht jedes Mal eine Papierschicht gewählt. Die vorliegende Erfindung ist, was die Wahl der perforierten Schicht angeht, allerdings keineswegs auf Papier beschränkt. Bei der mit durchgehenden Öffnungen versehenen Substratschicht könnte es sich genauso gut um eine polymere Schicht, z.B. eine Folie, handeln.

## Patentansprüche

1. Verfahren zum Herstellen eines mehrlagigen Wertdokumentsubstrats (1a, 1b, 1c, 1d, 1f, 1g), umfassend
A) das Bereitstellen einer ersten Schicht (2), einer zweiten Schicht (3) und eines länglichen Sicherheitselements (4), wobei die erste Schicht (2) zumindest eine durchgehende Öffnung (5) aufweist und die erste Schicht (2) und die zweite Schicht (3) jeweils von einer polymeren Schicht oder einer Papierschicht gewählt sind, wobei die Schichten und das längliche Sicherheitselement jeweils in Form einer Endlosbahn vorliegen,
B) das Auftragen von Kaschierklebstoff (6) auf eine Oberfläche von zumindest der ersten Schicht (2) mittels Kiss-Print,
C) das Zusammenkaschieren der ersten Schicht (2), der zweiten Schicht (3) und des länglichen Sicherheitselements (4) mittels Kaschierwalzen, so dass das längliche Sicherheitselement (4) zwischen der ersten Schicht (2) und der zweiten Schicht (3) eingebettet wird und die Öffnung (5) der ersten Schicht (2) einseitig mit dem länglichen Sicherheitselement (4) verschlossen wird.

2. Verfahren nach Anspruch 1, wobei die im Schritt A) bereitgestellte erste Schicht (2) eine Papierschicht ist und die zweite Schicht (3) eine polymere Schicht ist.

3. Verfahren nach einem der Ansprüche 1 oder 2, wobei im Schritt A) zusätzlich eine dritte Schicht (7) bereitgestellt wird, die eine polymere Schicht ist, im Schritt B) Kaschierklebstoff (6) zusätzlich auf eine Oberfläche der dritten Schicht (7) aufgetragen wird und im Schritt C) das Zusammenkaschieren der ersten Schicht (2), der zweiten Schicht (3), der dritten Schicht (7) und des länglichen Sicherheitselements (4) mittels Kaschierwalzen so erfolgt, dass die zweite Schicht (3) und die dritte Schicht (7) jeweils eine Deckschicht bilden, die erste Schicht (2) eine Zwischenschicht bildet, das längliche Sicherheitselement (4) zwischen der ersten Schicht (2) und der zweiten Schicht (3) eingebettet wird und die Öffnung (5) der ersten Schicht (2) einseitig mit dem länglichen Sicherheitselement (4) verschlossen wird.

4. Verfahren nach Anspruch 1, wobei im Schritt A) jede der ersten Schicht (2) und der zweiten Schicht (3) zumindest eine durchgehende Öffnung (5) aufweisen, im Schritt B) Kaschierklebstoff (6) auf eine Oberfläche der ersten Schicht (2) und auf eine Oberfläche der zweiten Schicht (3) mittels Kiss-Print aufgetragen wird, und im Schritt C) das Zusammenkaschieren der ersten Schicht (2), der zweiten Schicht (3) und des länglichen Sicherheitselements (4) mittels Kaschierwalzen so erfolgt, dass das längliche Sicherheitselement (4) zwischen der ersten Schicht (2) und der zweiten Schicht (3) eingebettet wird und sowohl die Öffnung (5) der ersten Schicht (2), als auch die Öffnung (5) der zweiten Schicht (3) jeweils einseitig mit dem länglichen Sicherheitselement (4) verschlossen werden.

5. Verfahren nach Anspruch 4, wobei jede der im Schritt A) bereitgestellten ersten Schicht (2) und zweiten Schicht (3) eine Papierschicht ist.

6. Verfahren nach einem der Ansprüche 4 oder 5, wobei im Schritt A) zusätzlich eine dritte Schicht (7) bereitgestellt wird, die eine polymere Schicht ist, im Schritt B) Kaschierklebstoff (6) zusätzlich auf eine Oberfläche der dritten Schicht (7) aufgetragen wird und im Schritt C) das Zusammenkaschieren der ersten Schicht (2), der zweiten Schicht (3), der dritten Schicht (7) und des länglichen Sicherheitselements (4) mittels Kaschierwalzen so erfolgt, dass die zweite Schicht (3) und die dritte Schicht (7) jeweils eine Deckschicht bilden, die erste Schicht (2) eine Zwischenschicht bildet, das längliche Sicherheitselement (4) zwischen der ersten Schicht (2) und der zweiten Schicht (3) eingebettet wird und sowohl die Öffnung (5) der ersten Schicht (2), als auch die Öffnung (5) der zweiten Schicht (3) jeweils einseitig mit dem länglichen Sicherheitselement (4) verschlossen werden.

7. Wertdokumentsubstrat (1c, 1d), erhältlich durch das Verfahren gemäß einem der Ansprüche 4, 5 oder 6.

8. Verfahren zum Herstellen eines Folienverbundes (1e), der zur Herstellung von Wertdokumenten geeignet ist, umfassend
D) das Bereitstellen eines nach dem Verfahren gemäß einem der Ansprüche 4 oder 5 erhältlichen Wertdokument-Substrats (1c), einer ersten polymeren Schicht (7) und einer zweiten polymeren Schicht (8),
E) das Auftragen von Kaschierklebstoff (6) auf eine Oberfläche der ersten polymeren Schicht (7) und auf eine Oberfläche der zweiten polymeren Schicht (8),
F) das Zusammenkaschieren des Wertdokument-Substrats (1c), der ersten polymeren Schicht (7) und der zweiten polymeren Schicht (8), so dass die erste polymere Schicht (7) und die zweite polymere Schicht (8) jeweils eine Deckschicht bilden und das Wertdokument-Substrat (1c) eine Zwischenschicht bildet.

9. Verfahren zum Herstellen eines Folienverbundes (1e), der zur Herstellung von Wertdokumenten geeignet ist, umfassend
D) das Bereitstellen eines nach dem Verfahren gemäß Anspruch 6 erhältlichen Wertdokument-Substrats (1d) und einer polymeren Schicht (8),
E) das Auftragen von Kaschierklebstoff (6) auf eine Oberfläche der polymeren Schicht (8),
F) das Zusammenkaschieren des Wertdokument-Substrats (1d) und der polymeren Schicht (8) auf solche Weise, dass die im Schritt D) bereitgestellte polymere Schicht (8) und die polymere, dritte Schicht (7) des im Schritt D) bereitgestellten Wertdokument-Substrats (1d) jeweils eine Deckschicht bilden.

10. Folienverbund (1e) zur Herstellung von Wertdokumenten, erhältlich durch das Verfahren gemäß Anspruch 8 oder 9.

11. Wertdokument, das ein Substrat gemäß Anspruch 7 oder einen Folienverbund gemäß Anspruch 10 aufweist.

## Claims

1. A method for manufacturing a multilayer value-document substrate (1a, 1b, 1c, 1d, 1f, 1g) comprising
A) making available a first layer (2), a second layer (3) and an elongate security element (4), wherein the first layer (2) has at least one through opening (5) and the first layer (2) and the second layer (3) are respectively chosen from a polymeric layer or a paper layer, wherein the layers and the elongate security element are present respectively in the form of an endless web,
B) applying laminating adhesive (6) to a surface of at least the first layer (2) by means of kiss printing,
C) laminating together the first layer (2), the second layer (3) and the elongate security element (4) by means of laminating rollers, such that the elongate security element (4) is embedded between the first layer (2) and the second layer (3) and the opening (5) of the first layer (2) is closed on one side with the elongate security element (4).

2. The method according to claim 1, wherein the first layer (2) made available in step A) is a paper layer and the second layer (3) is a polymeric layer.

3. The method according to any of the claims 1 or 2, wherein in step A) additionally a third layer (7) is made available, which is a polymeric layer, in step B) laminating adhesive (6) is additionally applied to a surface of the third layer (7) and in step C) the laminating together of the first layer (2), the second layer (3), the third layer (7) and the elongate security element (4) by means of laminating rollers is effected such that the second layer (3) and the third layer (7) respectively form a cover layer, the first layer (2) forms an intermediate layer, the elongate security element (4) is embedded between the first layer (2) and the second layer (3) and the opening (5) of the first layer (2) is closed on one side with the elongate security element (4).

4. The method according to claim 1, wherein in step A) each of the first layer (2) and the second layer (3) have at least one through opening (5), in step B) laminating adhesive (6) is applied to a surface of the first layer (2) and to a surface of the second layer (3) by means of kiss printing, and in step C) the laminating together of the first layer (2), the second layer (3) and the elongate security element (4) by means of laminating rollers is effected such that the elongate security element (4) is embedded between the first layer (2) and the second layer (3) and both the opening (5) of the first layer (2) and the opening (5) of the second layer (3) are closed respectively on one side with the elongate security element (4).

5. The method according to claim 4, wherein each of the first layer (2) and the second layer (3) made available in step A) is a paper layer.

6. The method according to any of the claims 4 or 5, wherein in step A) additionally a third layer (7) is made available, which is a polymeric layer, in step B) laminating adhesive (6) is additionally applied to a surface of the third layer (7) and in step C) the laminating together of the first layer (2), the second layer (3), the third layer (7) and the elongate security element (4) by means of laminating rollers is effected such that the second layer (3) and the third layer (7) respectively form a cover layer, the first layer (2) forms an intermediate layer, the elongate security element (4) is embedded between the first layer (2) and the second layer (3) and both of the opening (5) of the first layer (2) and the opening (5) of the second layer (3) are closed respectively on one side with the elongate security element (4).

7. A value document substrate (1c, 1d) obtainable by the method according to any of the claims 4, 5 or 6.

8. A method for manufacturing a foil composite (1e) that is suitable for manufacturing value documents, comprising
D) making available a value document substrate (1c) obtainable by the method according to any of the claims 4 or 5, a first polymeric layer (7) and a second polymeric layer (8),
E) applying laminating adhesive (6) to a surface of the first polymeric layer (7) and to a surface of the second polymeric layer (8),
F) laminating together the value document substrate (1c), the first polymeric layer (7) and the second polymeric layer (8), such that the first polymeric layer (7) and the second polymeric layer (8) respectively form a cover layer and the value document substrate (1c) forms an intermediate layer.

9. A method for manufacturing a foil composite (1e) that is suitable for manufacturing value documents, comprising
D) making available a value document substrate (1d) obtainable by the method according to claim 6 and a polymeric layer (8),
E) applying laminating adhesive (6) to a surface of the polymeric layer (8),
F) laminating together the value document substrate (1d) and the polymeric layer (8) in such a fashion that the polymeric layer (8) made available in step D) and the polymeric, third layer (7) of the value document substrate (1d) made available in step D) respectively form a cover layer.

10. A foil composite (1e) for manufacturing value documents, obtainable by the method according to claim 8 or 9.

11. A value document having a substrate according to claim 7 or a foil composite according to claim 10.

## Revendications

1. Procédé de fabrication d'un substrat pour documents de valeurs multicouche (1a, 1b, 1c, 1d, 1f, 1g), comprenant
A) la mise à disposition d'une première couche (2), d'une deuxième couche (3) et d'un élément de sécurité (4) allongé, la première couche (2) comportant au moins une ouverture (5) traversante et la première couche (2) et la deuxième couche (3) étant respectivement choisies de façon à être une couche polymère ou une couche de papier, les couches et l'élément de sécurité allongé se trouvant respectivement sous forme d'une bande sans fin,
B) l'application de colle de contrecollage (6) sur une surface d'au moins la première couche (2) au moyen d'impression par effleurage,
C) le contrecollage joignant ensemble la première couche (2), la deuxième couche (3) et l'élément de sécurité (4) allongé au moyen de rouleaux de contrecollage, de telle sorte que l'élément de sécurité (4) allongé est encastré entre la première couche (2) et la deuxième couche (3) et que l'ouverture (5) de la première couche (2) est fermée d'un côté par l'élément de sécurité (4) allongé.

2. Procédé selon la revendication 1, la première couche (2) mise à disposition à l'étape A) étant une couche de papier, et la deuxième couche (3) étant une couche polymère.

3. Procédé selon une des revendications 1 ou 2, cependant que, à l'étape A), il est en outre mis à disposition une troisième couche (7) qui est une couche polymère, que, à l'étape B), de la colle de contrecollage (6) est appliquée en outre sur une surface de la troisième couche (7), et que, à l'étape C), le contrecollage joignant ensemble la première couche (2), la deuxième couche (3), la troisième couche (7) et l'élément de sécurité (4) allongé a lieu de telle manière au moyen de rouleaux de contrecollage que la deuxième couche (3) et la troisième couche (7) constituent respectivement une couche de recouvrement, que la première couche (2) constitue une couche intermédiaire, que l'élément de sécurité (4) allongé est encastré entre la première couche (2) et la deuxième couche (3), et que l'ouverture (5) de la première couche (2) est fermée d'un côté par l'élément de sécurité (4) allongé.

4. Procédé selon la revendication 1, cependant que, à l'étape A), chacune de la première couche (2) et de la deuxième couche (3) comportent au moins une ouverture (5) traversante, que, à l'étape B), de la colle de contrecollage (6) est appliquée sur une surface de la première couche (2) et sur une surface de la deuxième couche (3) au moyen d'impression par effleurage, et que, à l'étape C), le contrecollage joignant ensemble la première couche (2), la deuxième couche (3) et l'élément de sécurité (4) allongé a lieu de telle manière au moyen de rouleaux de contrecollage que l'élément de sécurité (4) allongé est encastré entre la première couche (2) et la deuxième couche (3), et que tant l'ouverture (5) de la première couche (2) que l'ouverture (5) de la deuxième couche (3) sont respectivement fermées d'un côté par l'élément de sécurité (4) allongé.

5. Procédé selon la revendication 4, cependant que chacune des première couche (2) et deuxième couche (3) mises à disposition à l'étape A) sont une couche de papier.

6. Procédé selon une des revendications 4 ou 5, cependant que, à l'étape A), il est en outre mis à disposition une troisième couche (7) qui est une couche polymère, que, à l'étape B), de la colle de contrecollage (6) est appliquée en outre sur une surface de la troisième couche (7), et que, à l'étape C), le contrecollage joignant ensemble la première couche (2), la deuxième couche (3), la troisième couche (7) et l'élément de sécurité (4) allongé a lieu de telle manière au moyen de rouleaux de contrecollage que la deuxième couche (3) et la troisième couche (7) constituent respectivement une couche de recouvrement, que la première couche (2) constitue une couche intermédiaire, que l'élément de sécurité (4) allongé est encastré entre la première couche (2) et la deuxième couche (3), et que tant l'ouverture (5) de la première couche (2) que l'ouverture (5) de la deuxième couche (3) sont respectivement fermées d'un côté par l'élément de sécurité (4) allongé.

7. Substrat pour documents de valeurs (1c, 1d), pouvant être obtenu par le procédé selon une des revendications 4, 5 ou 6.

8. Procédé de fabrication d'un film composite (1e) approprié à la fabrication de documents de valeurs, comprenant
D) la mise à disposition d'un substrat pour documents de valeurs (1c) pouvant être obtenu suivant le procédé selon une des revendications 4 ou 5, d'une première couche polymère (7) et d'une deuxième couche polymère (8)
E) l'application de colle de contrecollage (6) sur une surface de la première couche polymère (7) et sur une surface de la deuxième couche polymère (8),
F) le contrecollage joignant ensemble le substrat pour documents de valeurs (1c), la première couche polymère (7) et la deuxième couche polymère (8), de telle sorte que la première couche polymère (7) et la deuxième couche polymère (8) constituent respectivement une couche de recouvrement et que le substrat pour documents de valeurs (1c) constitue une couche intermédiaire.

9. Procédé de fabrication d'un film composite (1e) approprié à la fabrication de documents de valeurs, comprenant
D) la mise à disposition d'un substrat pour documents de valeurs (1d) pouvant être obtenu suivant le procédé selon la revendication 6 et d'une couche polymère (8),
E) l'application de colle de contrecollage (6) sur une surface de la couche polymère (8),
F) le contrecollage joignant ensemble le substrat pour documents de valeurs (1d) et la couche polymère (8) de telle sorte que la couche polymère (8) mise à disposition à l'étape D) et la troisième couche (7), polymère, du substrat pour documents de valeurs (1d) mis à disposition à l'étape D) constituent respectivement une couche de recouvrement.

10. Film composite (le) destiné à la fabrication de documents de valeurs, pouvant être obtenu par le procédé selon la revendication 8 ou 9.

11. Document de valeur comportant un substrat selon la revendication 7 ou un film composite selon la revendication 10.
